(19) Europäisches Patentamt

European Patent Office

Office européen des brevets

(11) **EP 0 776 467 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(21) Anmeldenummer: **95927652.8**

(22) Anmeldetag: **09.08.1995**

(51) Int. Cl.[7]: **G01L 1/14**, G01B 7/16

(86) Internationale Anmeldenummer:
**PCT/DE95/01053**

(87) Internationale Veröffentlichungsnummer:
**WO 96/05492 (22.02.1996 Gazette 1996/09)**

(54) **KRAFT- ODER DEHNUNGSSENSOR**

FORCE OR EXTENSION SENSOR

CAPTEUR DE FORCE OU D'ALLONGEMENT

(84) Benannte Vertragsstaaten:
**AT BE CH DE ES FR GB IT LI NL SE**

(30) Priorität: **16.08.1994 DE 4429050**

(43) Veröffentlichungstag der Anmeldung:
**04.06.1997 Patentblatt 1997/23**

(73) Patentinhaber:
**SIEMENS AKTIENGESELLSCHAFT
80333 München (DE)**

(72) Erfinder:
- **DOEMENS, Günter**
  **D-83607 Holzkirchen (DE)**
- **GILCH, Markus**
  **D-85419 Mauern (DE)**

(56) Entgegenhaltungen:
**EP-A- 0 354 386          DE-A- 2 715 831**

**Beschreibung**

Aus der EP-B-0 354 386, ist ein Meßaufnehmer für Längen- oder Abstandsänderungen mit mechanisch-elektrischer Meßgrößenumformung bekannt, bei dem als verstellbare Kapazität ein Meßkondensator mit zwei parallel zueinander verstellbaren Elektrodenstrukturen vorgesehen ist. Die kammförmig ausgebildeten und ineinandergreifenden Elektrodenstrukturen bestehen jeweils aus mehreren ebenen, parallel im Abstand zueinander angeordneten Elektroden, die paarweise einander zugeordnet sind. Durch eine stark unsymmetrische Anordnung der Elektrodenstrukturen wird eine kapazitive Entkopplung erreicht, so daß die Gesamtkapazität des Meßkondensators sich aus einer Parallelschaltung von Elektrodenpaaren ergibt, die jeweils durch einander zugeordnete Elektroden gebildet sind. Als Meßgröße dient die durch den variablen Elektrodenabstand der Elektrodenpaare hervorgerufene Kapazitätsänderung. Die Meßaufnehmer werden insbesondere bei der berührungslosen Messung von Drehmomenten an rotierenden Wellen eingesetzt. Mit als Mikrostrukturen ausgebildete Elektrodenstrukturen können beispielsweise Torsionen von wenigen Mikrometern erfaßt werden. Für eine generelle Messung einer linearen Kraft oder Dehnung sind die in der EP-B-0 354 386 beschriebenen Meßaufnehmer nur bedingt geeignet, da die temperaturbedingte Dehnung die Elektrodenabstände unmittelbar verändert und damit das Meßergebnis verfälscht.

Für statische oder dynamische Kraft- bzw. oder Dehnungsmessungen werden in der Regel Dehnungsmeßstreifen eingesetzt, die aus mehreren Schleifen von dünnem Widerstandsdraht bestehen, die in einen Träger aus Papier und Kunstharz eingebettet sind. Dieser Träger wird auf die Meßstelle geklebt und macht infolgedessen die Längenänderung des Meßobjekts an dieser Stelle mit. Die dabei eintretende Längung bzw. Verkürzung der Drahtschleifen ergibt eine Widerstandsänderung, die der Dehnung des Meßobjekts proportional ist. Neben Anwendungen, bei denen die Messung einer Dehnung der primäre Zweck der Messung ist, kann mit einem Dehnungsmeßstreifen über die Dehnung auch eine Kraft gemessen werden. Begrenzte Wechsellast- und Überlastfestigkeit, sowie umständliche Applikationsverfahren, beschränken jedoch den Einsatz dieser Dehnungsmeßstreifen, insbesondere im Feldeinsatz des Anlagen- und Maschinenbaues.

Der im Anspruch 1 angegebenen Erfindung liegt das Problem zugrunde, die industrielle Kraft- oder Dehnungsmessung wesentlich zu verbessern und in ihrem Anwendungsbereich gegenüber den bekannten Dehnungsmeßstreifen deutlich zu erweitern.

Im Vergleich zu den Dehnungsmeßstreifen ergeben sich mit dem erfindungsgemäßen Kraft- oder Dehnungssensor insbesondere folgende Vorteile:

- deutlich höhere Überlastsicherheit
- wesentlich verbesserte Wechsellastfestigkeit
- frequenzbasiertes Meßsignal
- deutlich verbesserte Linearität und Nullpunktstabilität
- deutlich verringerter Temperaturgang und Hysterese
- einfache Applikation, weitgehend unabhängig von dem Ausdehnungskoeffizienten des Trägermaterials
- kostengünstiger Aufbau durch Mikrosystemtechnik.

Aufgrund obiger Vorteile wird der erfindungsgemäße Kraft- oder Dehnungssensor die bekannten Dehnungsmeßstreifen in vielen Bereichen ablösen, sowie neue Anwendungen, wie z.B. in der Anlagentechnik oder der Automobiltechnik, eröffnen.

Der Erfindung liegt die Erkenntnis zugrunde, daß eine elektrische Reihenschaltung des Meßkondensators und eines zweiten, identisch ausgebildeten Kompensationskondensators dann theoretisch eine exakte Kompensation des Temperatureinflusses ermöglicht, wenn der Kompensationskondensator orthogonal zum Meßkondensator ausgerichtet ist, und wenn die Befestigungspunkte des Kompensationskondensators so gewählt sind, daß temperaturbedingte Änderungen der Elektrodenabstände von Meßkondensator und Kompensationskondensator umgekehrte Vorzeichen aufweisen.

Vorteilhafte Ausgestaltungen der Erfindung sind in den abhängigen Ansprüchen angegeben.

Die Ausgestaltung nach Anspruch 2 gewährleistet durch die dicht nebeneinanderliegende Anordnung von Meßkondensator und Kompensationskondensator gleiche Temperatureinflüsse auf die Elektrodenabstände beider Kondensatoren, so daß sich durch die Reihenschaltung und durch die umgekehrten Vorzeichen der Änderungen der Elektrodenabstände tatsächlich eine exakte Kompensation des Temperatureinflusses ergibt.

Gemäß Anspruch 3 ist es für die Befestigung der Elektrodenstrukturen und für die Kompensation des Temperatureinflusses besonders vorteilhaft, wenn die Befestigungspunkte von Meßkondensator und Kompensationskondensator an einander diagonal gegenüberliegenden Ecken der jeweiligen Elektrodenstrukturen gebildet sind.

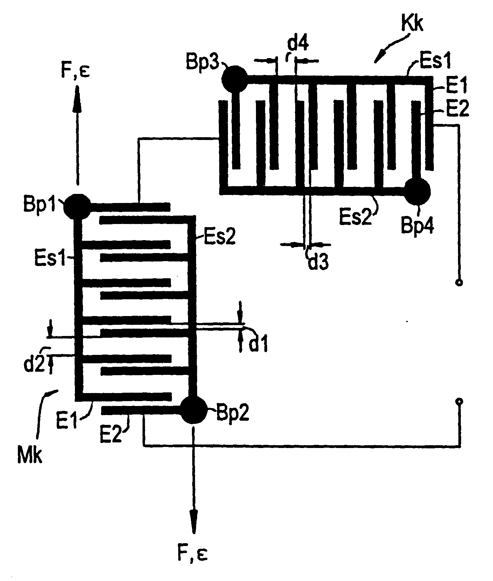

Ein Ausführungsbeispiel der Erfindung ist in der Zeichnung dargestellt und wird im folgenden näher beschrieben.

Die Zeichnung zeigt in stark vereinfachter schematischer Darstellung einen Kraft- oder Dehnungssensor mit einer elektrischen Reihenschaltung eines Meßkondensators Mk und eines zweiten, identisch ausgebildeten Kompensationskondensators Kk, der orthogonal zum Meßkondensator Mk angeordnet ist. Sowohl der Meßkondensator Mk, als auch der Kompensationskondensator Kk, sind durch zwei kammförmige Elektrodenstrukturen Es1 und Es2 gebildet, deren Elektroden E1 und E2 so angeordnet sind, daß jeweils ein kleiner Elektrodenabstand d1 bzw. d3 und ein wesentlich größerer Elektrodenabstand d2 bzw. d4 aufeinanderfolgen. Dementsprechend sind über Elektrodenpaare mit dem Abstand d2 bzw. d4 gebildete Kapazitäten vernachlässigbar gering gegenüber den über die Abstände d1 bzw. d3 der Elektrodenpaare gebildeten Kapazitäten. Die Gesamtkapazitäten von Meßkondensator Mk und Kompensationskondensator Kk ergeben sich somit jeweils durch Parallelschaltung der Elektrodenpaare mit dem Elektrodenabstand d1 bzw. d3.

Beim Meßkondensator Mk sind die beiden kammförmig ausgebildeten Elektrodenstrukturen Es1 und Es2 über Befestigungspunkte Bp1 und Bp2 an diagonal einander gegenüberliegenden Ecken in Abhängigkeit von der zu messenden Kraft F oder der zu messenden Dehnung ε parallel zueinander verstellbar. Im dargestellten Ausführungsbeispiel bewirkt die zu messende Kraft F oder die zu messende Dehnung ε oder auch eine temperaturbedingte Dehnung eine entsprechende Vergrößerung des Elektrodenabstandes d1.

Beim Kompensationskondensator Kk sind die beiden kammförmig ausgebildeten Elektrodenstrukturen Es1 und Es2 über Befestigungspunkte Bp3 und Bp4 an diagonal einander gegenüberliegenden Ecken in Abhängigkeit einer temperaturbedingten Dehnung parallel zueinander verstellbar. Die Befestigungspunkte Bp3 und Bp4 sind dabei im Vergleich zu den Befestigungspunkten Bp1 und Bp2 an anderen Ecken der Elektrodenstrukturen Es1 und Es2 angeordnet, so daß temperaturbedingte Änderungen des Elektrodenabstandes d1 des Meßkondensators Mk und des Elektrodenabstandes d3 des Kompensationskondensators Kk umgekehrte Vorzeichen aufweisen. Im dargestellten Ausführungsbeispiel bewirkt eine temperaturbedingte Dehnung in einer zu der zu messenden Kraft F oder der zu messenden Dehnung ε senkrechten Richtung eine entsprechende Verkürzung des Elektrodenabstandes d3.

Die Befestigungspunkte Bp1 und Bp2 des Meßkondensators Mk und die Befestigungspunkte Bp3 und Bp4 des Kompensationskondensators Kk sind beispielsweise elektrisch isoliert mit einem in der Zeichnung nicht näher dargestellten Träger verbunden, welcher seinerseits beispielsweise mit Hilfe von Schrauben an dem ebenfalls nicht näher dargestellten Meßobjekt angebracht ist. Eine Anbringung der Befestigungspunkte Bp1 und Bp2 bzw. Bp3 und Bp4 direkt am Meßobjekt ist ebenfalls möglich. Die elektrisch isolierte Befestigung erfolgt beispielsweise mit Hilfe von beidseitig metallisierten Keramikplättchen, die mit den Befestigungspunkten Bp1 und Bp2 bzw. Bp3 und Bp4 und dem Träger durch Löten verbunden werden.

Bei der vorstehend beschriebenen Anordnung und Ausgestaltung von Meßkondensator Mk und Kompensationskondensator Kk gelten für die Elektrodenabstände d1 bzw. d3 folgende Beziehungen:

$$d1 = d01 + \Delta dF + \Delta dT$$

$$d3 = d03 - \Delta dT,$$

wobei d01 der ursprüngliche Elektrodenabstand des Meßkondensators Mk, d03 der ursprüngliche Elektrodenabstand des Kompensationskondensators Kk, $\Delta dF$ die durch die Kraft F hervorgerufene Änderung des Elektrodenabstandes und $\Delta dT$ die temperaturbedingte Änderung des Elektrodenabstandes ist. Die temperaturbedingten Änderungen $\Delta dT$ von Meßkondensator Mk und Kompensationskondensator Kk, sind dabei gleich groß, aber in ihrer Richtung einander entgegengesetzt.

Die Kapazität C1 des Meßkondensators Mk beträgt dann

$$C1 = \frac{\varepsilon 0 \cdot A}{do1 + \Delta dF + \Delta dT}$$

wobei ε0 die Dielektrizitätskonstante ist, und wobei A die Fläche des Überdeckungsbereichs der Elektrodenpaare ist.

Die Kapazität C2 des Kompensationskondensators Kk beträgt

$$C2 = \frac{\varepsilon 0 \cdot A}{d03 - \Delta dT}$$

Bei einer elektrischen Reihenschaltung von Meßkondensator Mk und Kompensationskondensator Kk gilt für die resultierende Kapazität C

$$1/C = 1/C1 + 1/C2$$

$$1/C = \frac{d01 + \Delta dF + \Delta dT}{\varepsilon 0 \cdot A} + \frac{d03 - \Delta dT}{\varepsilon 0 \cdot A}$$

oder

$$C = \frac{\varepsilon 0 \cdot A}{d01 + d03 + \Delta dF}$$

Die resultierende Kapazität C ist also nur von der durch die Kraft F bedingten Änderung $\Delta dF$ abhängig, während ein Temperatureinfluß auf die zu messende Kraft F oder die zu messende Dehnung ε zumindest theoretisch vollständig kompensiert wird.

**Patentansprüche**

**1.** Kraft- oder Dehnungssensor mit kapazitivem Wandler, mit folgenden Merkmalen:

- die elektrisch voneinander isolierten, kammförmig ausgebildeten und ineinandergreifenden Elektrodenstrukturen (Es1,Es2) eines Meßkondensators (Mk) sind, über zwei Befestigungspunkte (Bp1,Bp2) in Abhängigkeit der zu messenden Kraft (F) oder zu messenden Dehnung (ε) parallel zueinander verstellbar,
- die Gesamtkapazität des Meßkondensators (Mk) ist durch Parallelschaltung einzelner Elektrodenpaare bestimmt, die jeweils durch eine Elektrode (E1) der einen Elektrodenstruktur (Es1) und eine zugeordnete, benachbarte Elektrode (E2) der zweiten Elektrodenstruktur (Es2) gebildet sind,
- der entsprechend der zu messenden Kraft (F) oder der zu messenden Dehnung (ε) variable Elektrodenabstand (d1) der Elektrodenpaare ist innerhalb des gesamten Meßbereichs klein gegeüber dem Abstand (d2) zwischen einander nicht zugeordneten, benachbarten Elektroden (E1,E2) der beiden Elektrodenstrukturen (Es1,Es2),
- die zu messende Kraft (F) oder die zu messende Dehnung (ε) ist aus der Änderung der resultierenden Kapazität einer elektrischen Reihenschaltung des Meßkondensators (Mk) und eines identisch ausgebildeten, orthogonal zum Meßkondensator (Mk) angeordneten Kompensationskondensators (Kk) ermittelbar,
- die Befestigungspunkte (Bp3,Bp4) des Kompensationskondensators (Kk) sind so gewählt, daß temperaturbedingte Änderungen des Elektrodenabstandes (d1,d3) von Meßkondensator (Mk) und Kompensationskondensator (Kk) umgekehrte Vorzeichen aufweisen.

2. Kraft- oder Dehnungssensor nach Anspruch 1, **dadurch gekennzeichnet,** daß der Kompensationskondensator (Kk) direkt neben dem Meßkondensator (Mk) angeordnet ist.

3. Kraft- oder Dehnungssensor nach Anspruch 1 oder 2, **dadurch gekennzeichnet,** daß die Befestigungspunkte (Bp1,Bp2,Bp3,Bp4) von Meßkondensator (Mk) und Kompensationskondensator (Kk) an einander diagonal gegenüberliegenden Ecken der jeweiligen Elektrodenstrukturen (Es1,Es2) gebildet sind.

## Claims

1. Force or extension sensor with a capacitive transducer, having the following features:

- the electrode structures (Es1, Es2) of a measuring capacitor (Mk), which are electrically insulated from one another, have a comb-like design and interengage, can be moved parallel to one another via two securing points (Bp1, Bp2) as a function of the force (F) to be measured or of the extension (å) to be measured,
- the total capacitance of the measuring capacitor (Mk) is determined by parallel connection of individual electrode pairs which are in each case formed by one electrode (E1) of one electrode structure (Es1) and an associated adjacent electrode (E2) of the second electrode structure (Es2),
- within the total measuring range, the electrode separation (d1) of the electrode pairs, which can vary according to the force (F) to be measured or the extension (å) to be measured, is small compared to the distance (d2) between adjacent electrodes (E1, E2), not assigned to each other, of the two electrode structures (Es1, Es2),
- the force (F) to be measured, or the extension (å) to be measured, can be determined from the change in the resulting capacitance of an electrical series circuit comprising measuring capacitor (Mk) and an identically designed compensating capacitor (Kk) arranged orthogonally to the measuring capacitor (Mk),
- the securing points (Bp3, Bp4) of the compensating capacitor (Kk) are selected in such a way that the thermally induced variations in the electrode separation (d1, d3) of the measuring capacitor (Mk) and of the compensating capacitor (Kk) have opposite signs.

2. Force or extension sensor according to Claim 1, characterized in that the compensating capacitor (Kk) is arranged directly next to the measuring capacitor (Mk).

3. Force or extension sensor according to Claim 1 or 2, characterized in that the securing points (Bp1, Bp2, Bp3, Bp4) of the measuring capacitor (Mk) and of the compensating capacitor (Kk) are formed at diagonally opposite corners of the respective electrode structures (Es1, Es2).

## Revendications

1. Capteur de force ou d'allongement avec transducteur capacitif présentant les caractéristiques suivantes :

- les structures d'électrodes (Es1, Es2), isolées électriquement l'une de l'autre, configurées en peigne et s'emboîtant l'une dans l'autre, d'un condensateur de mesure (Mk) peuvent être réglées parallèlement l'une par rapport à l'autre par deux points de fixation (Bp1, Bp2) en fonction de la force (F) à mesurer ou de l'allongement (ε) à mesurer;

- la capacité totale du condensateur de mesure (Mk) est déterminèe par le montage parallèle de paires d'électrodes individuelles qui sont chacune formées par une électrode (E1) de la première structure d'électrodes (Es1) et par une électrode (E2) adjointe, voisine, de la deuxième structure d'électrode (Es2);
- l'écartement variable d'électrodes (d1) de la paire d'électrodes, correspondant à la force (F) à mesurer ou à l'allongement (ε) à mesurer, est, à l'intérieur de la zone totale à mesurer, petite par rapport à l'écartement (d2) entre les électrodes voisines non conjuguées (E1, E2) des deux structures d'électrodes (Es1, Es2);
- la force (F) à mesurer ou l'allongement (ε) à mesurer peuvent être déterminés à partir de la variation de la capacité résultante d'un montage électrique en série du condensateur de mesure (Mk) et d'un condensateur de compensation (Kk) de configuration identique et disposé de manière orthogonale par rapport au condensateur de mesure (Mk),
- les points de fixation (Bp3, Bp4) du condensateur de compensation (Kk) sont sélectionnés de sorte que les variations conditionnées par la température de l'écartement des électrodes (d1, d3) du condensateur de mesure (Mk) et du condensateur de compensation (Kk) présentent des signes contraires.

2. Capteur de force ou d'allongement selon la revendication 1, caractérisé en ce que le condensateur de compensation (Kk) est disposé directement à côté du condensateur de mesure (Mk).

3. Capteur de force ou d'allongement selon la revendication 1 ou 2, caractérisé en ce que les points de fixation (Bp1, Bp2, Bp3, Bp4) du condensateur de mesure (Mk) et du condensateur de compensation (Kk) sont formés à des angles, s'opposant l'un à l'autre en diagonale, de chacune des structures d'électrodes (Es1, Es2).